# FASCICULE DE BREVET EUROPEEN

(11) **EP 3 253 552 B1**
(45) Date de publication et mention de la délivrance du brevet: **26.06.2019**
(21) Numéro de dépôt: 16703468.5
(22) Date de dépôt: 02.02.2016
(51) Int. Cl.: B29C 48/92, B29C 48/255, B29C 48/40

(54) **PROCÉDÉ DE CONTRÔLE-COMMANDE D'UNE MACHINE D'EXTRUSION BI-VIS, AINSI QUE MACHINE D'EXTRUSION BI-VIS**
VERFAHREN ZUR ÜBERWACHUNG UND STEUERUNG EINES DOPPELSCHNECKENEXTRUDERS SOWIE DOPPELSCHNECKENEXTRUDER
METHOD FOR MONITORING AND CONTROLLING A TWIN-SCREW EXTRUDER, AND TWIN-SCREW EXTRUDER

(30) Priorité: 03.02.2015 FR 1550835
(43) Date de publication de la demande: 13.12.2017
(73) Titulaire: Clextral, 42700 Firminy (FR)
(72) Inventeur: DURAND, Daniel, 43210 Bas en Basset (FR); JAROUSSE, Thierry, 42240 Saint Maurice en Gourgois (FR)
(74) Mandataire: Lavoix
(86) Numéro de dépôt international: PCT/EP2016/052139
(87) Numéro de publication internationale: WO 2016/124570

(56) Documents cités:
- CN-U- 203 697 456
- DE-A1- 4 433 593
- JP-A- H 058 265
- JP-A- 2013 209 545
- US-A1- 2004 020 272
- Shau Tarng Lee ET AL: "Calculation of the viscosity of the polymer/blowing agent mixtures" In: "Polymeric Foams: Technology and Developments in Regulation, Process, and Products", 24 décembre 2008 (2008-12-24), CRC Press, XP055230077, ISBN: 978-1-4200-6126-0 page 73, page 73 figure 3.2

## Description

La présente invention concerne une machine d'extrusion bi-vis, ainsi qu'un procédé de contrôle-commande d'une telle machine.

L'invention s'intéresse aux machines d'extrusion dites bi-vis, qui comportent un fourreau, généralement thermorégulé, à l'intérieur duquel deux vis interpénétrantes, sont entrainées en rotation sur elles-mêmes de sorte qu'elles entrainent une matière à extruder depuis une partie amont du fourreau jusqu'à l'extrémité aval du fourreau où la matière est alors forcée de s'écouler à travers un dispositif de sortie qui inclut souvent une filière de mise en forme de la matière extrudée. Dans une telle machine d'extrusion, la matière subit à la fois une transformation mécanique, par mise en pression et par cisaillement par les vis, et une transformation thermique, par régulation de la température le long du fourreau.

La conduite d'une telle machine d'extrusion est délicate dans le sens où la qualité du produit extrudé est tributaire non seulement de la maîtrise des paramètres de réglage thermomécanique de la machine d'extrusion, que sont, entre autres, la vitesse de rotation des vis, la géométrie des vis, la température imposée au fourreau et le débit d'admission de la matière première dans la machine d'extrusion, mais également de la qualité de la matière première introduite dans la machine d'extrusion : en effet, la qualité de chacun des ingrédients de cette matière première peut varier, notamment du fait de leur variabilité physico-chimique (taux d'humidité, taux de matière grasse, granulométrie, etc.), de leur provenance ou encore de leurs conditions de stockage, si bien que la qualité de la matière extrudée en est affectée à réglage constant de la machine d'extrusion.

Pour apporter une réponse à cette problématique, il est connu de prélever régulièrement des échantillons du produit extrudé puis de les analyser a postériori : on comprend que cette approche ne permet pas de réguler la machine d'extrusion en temps réel.

Il est également connu de chercher à réguler la conduite de la machine d'extrusion en se basant sur la grandeur dite d'énergie spécifique mécanique, couramment appelée SME qui est l'acronyme de l'expression anglaise correspondante « Specific Mechanical Energy ». La SME correspond à l'énergie fournie par le moteur d'entrainement des vis de la machine d'extrusion, rapportée à l'unité de masse de matière extrudée. Ainsi, la SME reflète le niveau de la transformation mécanique de la matière en cours d'extrusion. L'art antérieur enseigne qu'en mesurant en permanence la SME, on peut réguler la machine d'extrusion en ajustant, au niveau de la partie courante des vis, une section de passage pour la matière en cours d'extrusion : l'idée est de « boucler », autrement dit d'asservir une variation de section de passage pour la matière en cours d'extrusion, avec la mesure de la SME. Cette solution n'apporte cependant qu'une réponse très partielle à la problématique décrite plus haut. En effet, la SME ne donne qu'un aperçu partiel de la qualité du produit en sortie de la machine d'extrusion. En particulier, le temps de séjour de la matière dans la machine d'extrusion n'est pas pris en compte par la SME, alors qu'il influence directement la qualité du produit final extrudé.

De son côté, US 2004/0020272 propose de réaliser au cours de l'extrusion d'un polymère par une machine d'extrusion bi-vis, des mesures rhéologiques de la matière traitée par la machine d'extrusion, ces mesures étant en ligne, c'est-à-dire dans le flux de la matière à l'intérieur de la machine d'extrusion. Pour ce faire, des capteurs de pression et de température sont agencés sur la machine d'extrusion, plus précisément au niveau d'une filière de sortie de cette machine, ainsi qu'au niveau de l'espace séparant l'extrémité aval des vis et la filière. Les différentes mesures sont exploitées pour calculer, entre autres, la viscosité de la matière dans la machine d'extrusion. Plus globalement, ces mesures sont traitées en temps réel pour contrôler la qualité du polymère extrudé, ainsi que pour réguler la machine d'extrusion, sans toutefois que US 2004/0020272 n'explicite la façon de mettre en oeuvre cette régulation.

DE 44 33 593 suit une approche similaire à US 2004/0020272 : une machine d'extrusion intègre, entre la pointe de sa vis et une filière de sortie, un viscosimètre qui est constitué de plusieurs capteurs de pression se succédant dans la direction d'écoulement de la matière traitée. L'information délivrée conjointement par ces capteurs de pression est représentative de la viscosité de la matière s'écoulant entre la pointe de vis et la filière de sortie. Cette information est utilisée, en temps réel, pour réguler la machine d'extrusion en ce qui concerne sa température de fonctionnement et sa SME.

Le but de la présente invention est de proposer une réponse plus efficace et plus complète à la problématique de contrôle-commande des machines d'extrusion en vue d'obtenir une matière extrudée finale à qualité maîtrisée.

A cet effet, l'invention a pour objet un procédé de contrôle-commande d'une machine d'extrusion tel que défini à la revendication 1.

Une des idées à la base de l'invention est de recourir à la mesure de la viscosité de la matière dans la machine d'extrusion, la viscosité étant un marqueur pertinent des variations rhéologiques de la matière en cours d'extrusion. Cette mesure est prévue en ligne, c'est-à-dire dans le flux de la matière à l'intérieur de la machine d'extrusion : en effet, pour assurer une régulation en temps réel, l'évolution de la viscosité doit être appréciée en permanence pour la matière en cours d'extrusion. De plus, la viscosité est la résultante d'effets du cisaillement, de la pression, du temps de séjour, de la température, etc. appliqués à la matière extrudée. En effet, la viscosité correspond à la résistance à l'écoulement d'une matière sous l'influence d'au moins une contrainte telle qu'un cisaillement, une pression, la gravité, etc. : lorsque la viscosité augmente, la capacité du fluide à s'écouler diminue. L'invention propose ainsi de mesurer en permanence la viscosité de la matière en cours d'extrusion et d'ajuster en temps réel, à partir de cette mesure en continu, une section de passage pour la matière en sortie de la machine d'extrusion, c'est-à-dire pour la matière dans cette machine en aval de ses vis : en jouant sur cette section de passage de la machine d'extrusion alors que toutes choses sont égales par ailleurs, on modifie de manière correspondante le taux de remplissage de la machine par la matière en cours d'extrusion, plus précisément son taux de remplissage le long de ses vis interpénétrantes qui font progresser la matière au sein de la machine, ce qui fait varier de manière correspondante la viscosité de la matière en cours d'extrusion. En particulier, on comprend que, par exemple, en réduisant la section de passage en aval des vis interpénétrantes, on augmente la quantité de matière en amont de la restriction, c'est-à-dire au niveau des vis ; cela revient à dire qu'on augmente le taux de remplissage de la machine d'extrusion le long de ces vis ; et, sous l'action de ces vis, la matière est davantage cisaillée, ce qui en abaisse la viscosité. Ainsi, en connaissant préalablement une image de la valeur de viscosité pour le produit à obtenir en sortie de la machine d'extrusion, on est capable, lorsque la mesure de viscosité s'écarte de la valeur de viscosité souhaitée, de revenir à cette valeur de viscosité souhaitée en ajustant cette section de passage et ainsi de compenser, avec un actionneur correspondant de la conduite de la machine d'extrusion, les effets des irrégularités précitées de la matière première. On maintient alors sensiblement constante la qualité de la matière extrudée, en termes de densité, de dimensions caractéristiques, de degré de cuisson, de texture, etc. Plus généralement, en maitrisant la viscosité de la matière en cours d'extrusion, on dispose d'une image globale de la qualité du produit extrudé final. Avantageusement, on est même ainsi capable, moyennant cet ajustement de la section de passage en aval des vis, asservi à la mesure en ligne de la viscosité, de compenser les effets de l'usure de la machine d'extrusion, notamment les effets de l'évolution du taux de cisaillement résultant de cette usure.

Plus généralement, le procédé de commande conforme à l'invention permet entre autres :
- de maintenir une qualité du produit final extrudé constante en continu ;
- d'éviter des pertes de matière extrudée puisque la mesure en ligne de la viscosité permet d'avoir instantanément une information sur des variations de la matière en cours d'extrusion ;
- de visualiser instantanément des fluctuations des conditions d'extrusion, notamment l'évolution de la matière première, d'éventuels incidents du process d'extrusion et des potentiels problèmes techniques dans la machine d'extrusion ;
- d'utiliser la machine d'extrusion plus longtemps car, au lieu de changer des pièces usées, on peut augmenter le temps de séjour de la matière de façon à ce qu'elle soit soumis à un taux de cisaillement égal à celui d'une machine neuve, les vis et fourreau pouvant continuer à être utilisés malgré leur usure naturelle due aux frottements ; et
- de tester et développer, de manière maitrisée et répétable, de nouvelles caractéristiques pour les produits extrudés.

Des modes de réalisation préférentiels du procédé conforme à l'invention sont spécifiés aux revendications 2 et 3.

Suivant la disposition optionnelle avantageuse qui est spécifiée à la revendication 4, un ou plusieurs actionneurs de la conduite de la machine d'extrusion, autres que l'actionneur de modification de la section de passage pour la matière dans la machine d'extrusion en aval des vis de cette dernière, peuvent être mis en oeuvre de manière combinée à l'actionnement de l'ajustement de cette section de passage, toujours à partir de la mesure en ligne de la viscosité. Les performances de contrôle-commande de la machine d'extrusion en sont améliorées.

En pratique, la nature de la matière extrudée est indifférente : l'invention concerne aussi bien l'extrusion de matières agroalimentaires que non-agroalimentaires, telles que les matières plastiques, chimiques, pharmaceutiques, etc. Ceci étant, le procédé conforme à l'invention trouve une application particulièrement avantageuse lorsque la matière à extruder est non newtonienne, en particulier alimentaire, comme visé par la revendication 5. Un fluide est considéré ici comme non newtonien dès lors que sa viscosité dépend du taux de cisaillement. On comprend que pour une telle matière non newtonienne, il n'existe pas de lois linéaires relatives à sa viscosité : l'invention permet cependant de réguler efficacement la machine d'extrusion bi-vis en jouant sur son taux de remplissage, de sorte que, tout le long des vis, la matière est cisaillée ou, plus généralement, contrainte, en impactant donc la viscosité sur la totalité de la matière, excepté pour des portions marginales et donc négligeables de cette dernière.

L'invention a également pour objet une machine d'extrusion telle que définie à la revendication 6.

Des caractéristiques additionnelles avantageuses de la machine d'extrusion conforme à l'invention sont spécifiées aux revendications 7 à 15.

Bien entendu, l'invention s'applique, sans limitation, à diverses machines d'extrusion bi-vis, que les deux vis de ces dernières soient contra-rotatives ou co-rotatives. L'invention sera mieux comprise à la lecture de la description qui va suivre, donnée uniquement à titre d'exemple et faite en se référant aux dessins sur lesquels :
- la figure 1 est une coupe longitudinale schématique d'une machine d'extrusion conforme à l'invention ;
- la figure 2 est une vue à plus grande échelle d'une partie seulement de la machine de la figure 1 ;
- les figures 3 et 4 sont des coupes selon respectivement les lignes III-III et IV-IV de la figure 2 ; et
- les figures 5 et 6 illustrent une variante de la partie précitée de la machine d'extrusion, conforme à l'invention, la figure 6 étant une vue en perspective de cette partie de la machine d'extrusion tandis que la figure 5 en est une coupe longitudinale partielle, dans un plan similaire à celui de la figure 2.

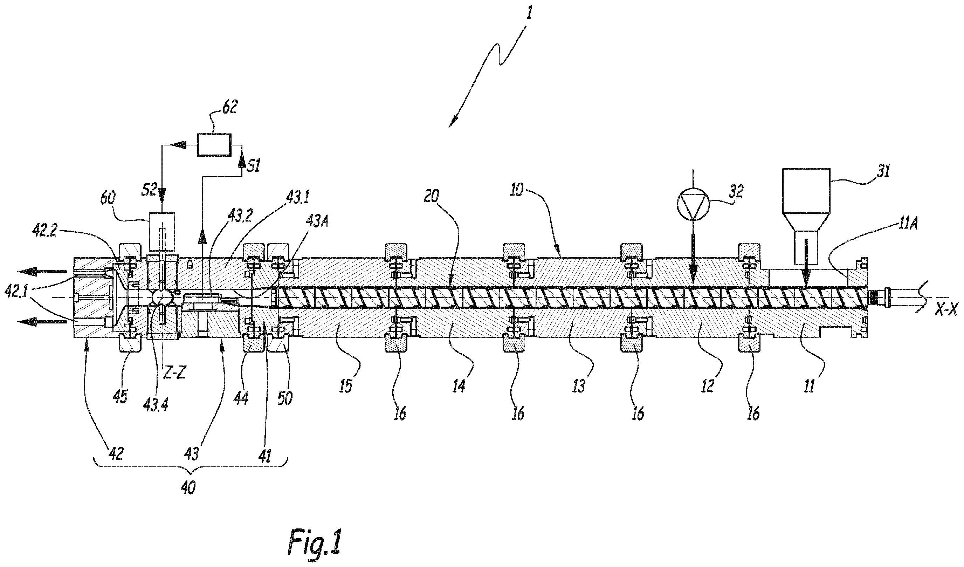

Sur la figure 1 est représentée de manière schématique une machine d'extrusion 1, couramment appelée « extrudeuse bi-vis ».

Cette machine d'extrusion 1 comporte un fourreau 10 de forme allongée, qui s'étend le long de et qui est centré sur axe géométrique X-X. A l'intérieur du fourreau 10, deux vis 20 s'étendent de manière parallèle à l'axe X-X, en étant reçues dans un alésage longitudinal complémentaire du fourreau, centré sur l'axe X-X. Ces deux vis 20 s'étendent de part et d'autre de l'axe X-X, tout en étant interpénétrantes, l'alésage précité du fourreau 10 présentant un profil transversal bilobé. Chaque vis 20 est entrainée en rotation sur elle-même, autour de son axe central, par une unité motrice, non représentée sur la figure 1, en prise mécanique avec une extrémité amont de la vis, à savoir celle de droite sur la figure 1, émergeant à l'extérieur du fourreau 10.

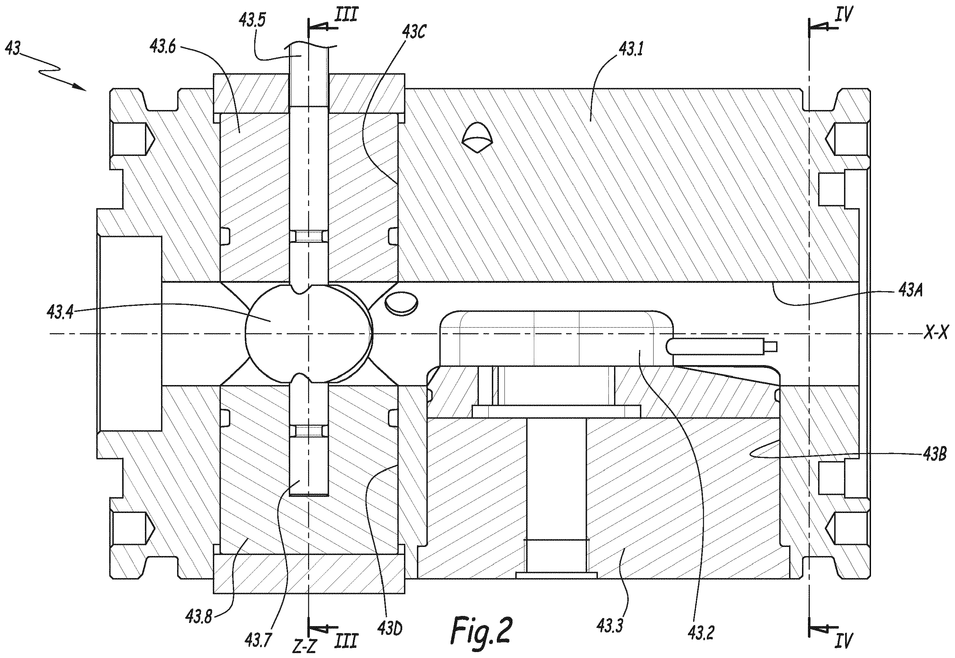

Les vis 20 de la machine d'extrusion 1 sont conçues, de par de leur profil fileté, pour entrainer une matière à extruder selon l'axe X-X, depuis une partie amont du fourreau 10, dans laquelle le ou les ingrédients de cette matière sont introduits dans l'alésage précité du fourreau, jusqu'à l'extrémité aval du fourreau 10, les termes « amont » et « aval » étant orientés dans le sens de progression de la matière à l'intérieur du fourreau sous l'action des vis 20, ce sens de progression étant de la droite vers la gauche sur les figures 1 et 2. Par ailleurs, de manière connue en soi et comme évoqué dans la partie introductive du présent document, les vis 20 sont conçues pour, en plus d'entrainer la matière à extruder, cisailler et mettre en pression cette matière, de manière à la transformer mécaniquement. Cet aspect de la machine d'extrusion 1 étant bien connu dans le domaine, il ne sera pas décrit ici plus avant.

Le fourreau 10 comporte plusieurs éléments modulaires se succédant le long de l'axe X-X, qui sont ici au nombre de cinq, en étant respectivement référencés 11 à 15 de l'amont vers l'aval. Chacun des éléments 11 à 15 délimite intérieurement une partie correspondante de l'alésage longitudinal central du fourreau 10, ces parties d'alésage étant dans le prolongement les unes des autres, selon l'axe X-X, à l'état assemblé des éléments 11 à 15, comme sur la figure 1. En pratique, comme représenté sur la figure 1, les éléments 11 à 15 sont assemblés deux à deux par des colliers de fixation 16.

Dans l'exemple de réalisation considéré sur la figure 1, l'élément 11 le plus en amont permet d'introduire, à l'intérieur de sa partie d'alésage central, un ou plusieurs ingrédients au moins partiellement solides de la matière à extruder. A cet effet, de manière connue en soi et non détaillée ici, cet élément 11 est pourvu d'un orifice traversant 11A, qui, transversalement à l'axe X-X, ouvre sur l'extérieur la partie d'alésage central de cet élément 11 et dans lequel débouche une trémie 31 d'alimentation en le ou les ingrédients au moins partiellement solides précités. De même, dans l'exemple considéré ici, l'élément 12 est conçu pour introduire, depuis l'extérieur, un ou des ingrédients liquides à l'intérieur de la partie d'alésage central correspondante. En pratique, de manière connue en soi et non détaillée, l'élément 12 est pourvu d'un ou de plusieurs orifices traversants qui, transversalement à l'axe X-X, raccordent la partie d'alésage précitée à une ou plusieurs pompes 32 d'injection de ce ou ces ingrédients liquides. Plus généralement, on comprend que, parmi les éléments 11 à 15 du fourreau 10, un ou plusieurs d'entre eux permettent d'introduire, à l'intérieur de l'alésage longitudinal central du fourreau 10, du ou des ingrédients de la matière à extruder par la machine d'extrusion 1.

La machine d'extrusion 1 comprend également un dispositif de sortie 40, qui est agencé à l'extrémité aval du fourreau 10. La matière sortant du fourreau 10 est, sous l'action des vis 20, forcée de s'écouler à travers le dispositif de sortie 40, duquel la matière extrudée émerge à l'extérieur de la machine. Dans l'exemple de réalisation sur les figures, le dispositif de sortie 40 comporte trois pièces distinctes modulaires, à savoir :
- à l'extrémité amont de ce dispositif 40, une plaque avant 41 de liaison avec l'extrémité aval du fourreau 10,
- à l'extrémité aval du dispositif 40, une filière 42 de mise en forme de la matière sortant du dispositif 40, et
- de manière interposée entre la plaque 41 et la filière 42, un module 43 reliant la plaque 41 à la filière 42.

La plaque 41 est rapportée fixement, par exemple par un collier de fixation 50, à l'extrémité aval de l'élément 15, le plus aval, du fourreau 10. De manière connue en soi, cette plaque 41 délimite intérieurement un alésage traversant, qui est centré sur l'axe X-X, qui s'étend dans le prolongement, selon cet axe, de la partie d'alésage central de l'élément 15, et à l'intérieur duquel est reçue l'extrémité aval libre chaque vis 20. L'alésage central de cette plaque 41 canalise la matière sortant du fourreau 10 poussée vers l'aval par les vis 20. A titre non limitatif, dans l'exemple considéré sur la figure 1, l'alésage central de la plaque 41 est avantageusement convergent vers l'aval, notamment afin de maximiser le remplissage de l'extrémité aval de cet alésage par la matière sortant du fourreau 10.

Le module 43, qui sera décrit plus en détail dans la suite, comprend un carter principal 43.1, qui est interposé, dans la direction de l'axe X-X, entre l'extrémité aval de la plaque 41 et l'extrémité amont de la filière 42, en étant fixé à celles-ci par des colliers respectifs 44 et 45, et qui délimite intérieurement un canal 43A d'écoulement de matière depuis l'extrémité aval de la plaque 41 jusqu'à l'extrémité amont de la filière 42. Ce canal d'écoulement 43A traverse le carter 43.1 axialement de part en part, en reliant les extrémités axiales opposées de celui-ci, en étant sensiblement centré sur l'axe X-X et en s'étendant ainsi dans le prolongement axial de l'alésage central de la plaque 41 et de l'alésage longitudinal central du fourreau 10, comme bien visible sur la figure 1.

De manière connue en soi, la filière 42 est prévue pour mettre en forme la matière extrudée par la machine d'extrusion 1, cette matière étant forcée, sous l'action des vis 20, de passer par des orifices 42.1 de sortie vers l'aval, délimités intérieurement par la filière 42. La forme de réalisation de la filière 42 n'est pas limitative de l'invention : en particulier, le nombre, l'agencement et, plus généralement, les caractéristiques des orifices de sortie 42.1 sont indifférents. De même, à titre non limitatif, dans l'exemple de réalisation considéré ici, la filière 42 est équipée, à son extrémité amont, d'un diffuseur 42.2 qui répartit la matière, entrant dans la filière, entre ses orifices de sortie 42.1, le volume interne, divergent vers l'aval, de ce diffuseur 42.2 étant, en amont, raccordé à l'extrémité aval du canal d'écoulement 43A du module 43 et, en aval, raccordé à l'extrémité amont des orifices de sortie 42.1.

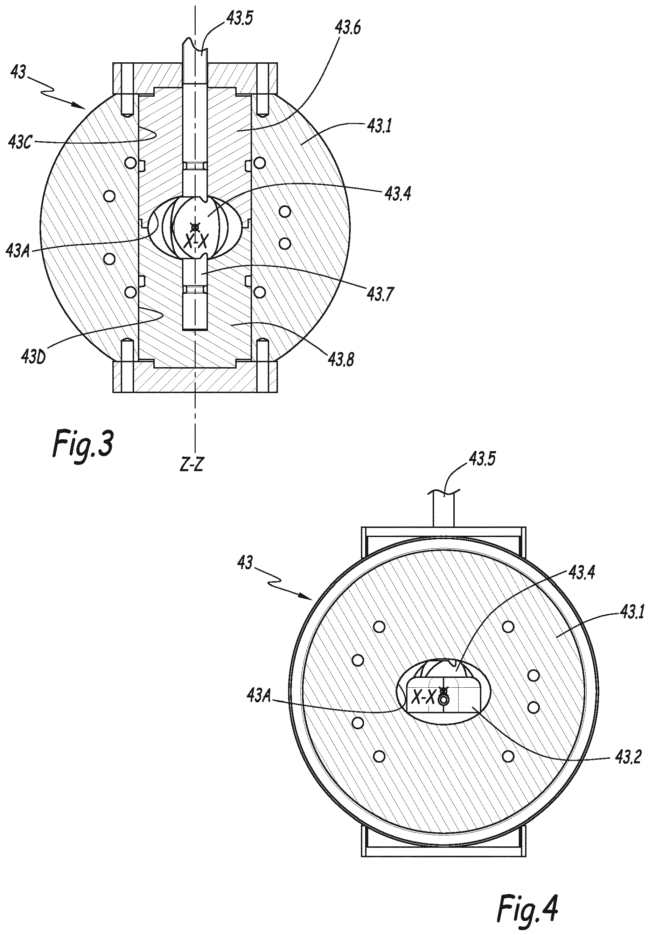

Comme bien visible sur les figures 2 à 4, qui montrent seul le module 43, ce dernier comporte un capteur de mesure de viscosité 43.2 qui, au moins en partie, est agencé dans le canal d'écoulement 43A de manière à mesurer en permanence la viscosité de la matière s'écoulant dans ce canal 43A, autrement dit de mesurer en ligne la viscosité de la matière à l'intérieur de la machine d'extrusion 1. Le capteur 43.2 peut donc être qualifié de capteur intégré. Ce capteur 43.2 relève, en lui-même, d'une technologie connue et est disponible dans le commerce. Ce capteur 43.2 est conçu pour produire, en permanence et en temps réel, un signal, indiqué schématiquement par la flèche S1 sur la figure 1, représentatif de la viscosité de la matière s'écoulant dans le canal 43A à partir de l'interaction entre cette matière en écoulement et la partie du capteur 43.2 agencée dans le canal 43A et donc au contact de cette matière. En pratique, le signal précité S1 est transmis jusqu'à l'extérieur du module 43 par tout moyen approprié, par exemple par une liaison filaire dans le cas où ce signal est de nature électrique.

En pratique, l'intégration du capteur 43.2 et son installation dans le canal d'écoulement 43A répondent aux contraintes d'hygiène, d'écoulement et de mesure de la matière à extruder considérée. Dans l'exemple de réalisation considéré sur les figures, le capteur 43.2 est porté fixement par une embase 43.3, qui est rapportée, de manière fixe et étanche, dans un logement complémentaire dédié 43B délimité par le carter 43.1 transversalement à l'axe X-X. La liaison filaire précitée est, de manière non représentée sur les figures, prévue pour rejoindre l'extérieur du module 43 via cette embase 43.3.

Le module 43 comporte également un volet 43.4 d'obturation variable du canal d'écoulement 43A, qui est agencé en travers de ce canal 43A de manière pivotante autour d'un axe géométrique Z-Z perpendiculaire à l'axe X-X et donc perpendiculaire à la direction d'écoulement de la matière dans le canal 43A. Par pivotement autour de l'axe Z-Z, le volet 43.4 permet de varier la section de passage du canal d'écoulement 43A, autrement dit la section de passage pour la matière en cours d'extrusion dans la machine d'extrusion 1. Sur les figures, le volet 43.4 occupe une position pivotée intermédiaire entre, d'une part, une position extrême, non représentée, d'obturation maximale et donc d'ouverture minimale, dans laquelle le plan de ce volet s'étend globalement à la perpendiculaire ou proche de la perpendiculaire à l'axe X-X, et d'autre part, une position extrême, non représentée, d'obturation minimale et donc d'ouverture maximale, dans laquelle le plan du volet s'étend globalement parallèlement ou quasi-parallèlement au plan géométrique contenant les axes X-X et Z-Z. Ainsi, par pivotement entre les deux positions extrêmes précitées, la section de passage du canal d'écoulement 43A varie entre un maximum et un minimum, cette variation de la section de passage étant réglable en fonction de la position pivotée du volet 43.4 autour de l'axe Z-Z. On comprend qu'en modifiant la section de passage du canal d'écoulement 43A, on modifie de manière correspondante le taux de remplissage de la machine d'extrusion 1 en amont du volet 43.4 et, de cette façon, notamment le taux de cisaillement appliqué à la matière par les vis 20 et donc la viscosité de cette matière. En pratique, pour des raisons de sécurité, il est préférable que, même en position extrême d'obturation maximale, le volet 43.4 n'obture pas complètement le canal d'écoulement 43A afin d'éviter toute mise en surpression de la machine d'extrusion 1.

La position pivotée du volet d'obturation 43.4 est commandée depuis l'extérieur du module 43. Dans l'exemple de réalisation considéré sur les figures, le volet 43.4 est solidaire d'une tige 43.5 d'entrainement en rotation autour de l'axe Z-Z, qui est sensiblement centrée sur cet axe Z-Z et dont une extrémité longitudinale émerge à l'extérieur du module 43, à savoir vers le haut sur les figures. Cette tige 43.5 est montée rotative dans un support complémentaire 43.6, lui-même reçu, de manière fixe et étanche, dans un logement complémentaire dédié 43C délimité par le carter 43.1 du module 43. Pour commander avec précision la position angulaire de la tige 43.5 autour de l'axe Z-Z et donc la position pivotée du volet 43.4, cette tige 43.5 est avantageusement pourvue d'un filetage extérieur, vissé dans un taraudage complémentaire délimité par le support 43.6. Par ailleurs, afin de renforcer la stabilité du volet 43.4, ce dernier est, à l'opposé, selon l'axe Z-Z, de la tige 43.5, solidaire d'un pion 43.7, centré sur l'axe Z-Z et reçu à rotation autour de cet axe dans un support complémentaire 43.8, lui-même rapporté, de manière fixe et étanche, dans un logement dédié complémentaire 43D délimité par le carter 43.1 du module 43.

Bien entendu, la forme de réalisation du volet 43.4 et des pièces associées 43.5 à 43.8 n'est pas limitative de l'invention : plus généralement, le module 43 est équipé d'un obturateur de son canal d'écoulement 43A, dont l'action d'obturation variable, résultant de sa mobilité dans le canal d'écoulement, est réglable, en particulier depuis l'extérieur de ce module.

Par ailleurs, on notera que, dans le mode de réalisation considéré sur les figures, le volet d'obturation 43.4 ou, plus généralement, un obturateur variable du canal d'écoulement 43A est avantageusement placé en aval du capteur de mesure de viscosité 43.2.Bien qu'il puisse être envisagé, à titre de variante non représentée, que le capteur de mesure de viscosité soit en aval du volet d'obturation 43.4 ou, plus généralement, d'un obturateur variable du canal d'écoulement 43A, l'agencement montré sur les figures est préféré car de cette façon, la viscosité mesurée par le capteur 43.2 est précisément celle de la matière ayant subi exclusivement le cisaillement par les vis 20, et non celle de la matière ayant en plus franchi le volet 43.4 ou l'obturateur. Dans tous les cas, le module 43 s'intercale avantageusement de manière particulièrement compacte entre la plaque 41 du fourreau 10 et la filière 42.

Comme représenté schématiquement sur la figure 1, le module 43 comporte en outre une unité motrice 60 d'entrainement de la tige 43.5 en rotation autour de l'axe Z-Z. En pratique, cette unité d'entrainement 60 comprend par exemple un actionneur de la tige 43.5, cet actionneur étant indifféremment mécanique, hydraulique ou électrique. Dans tous les cas, l'unité d'entrainement 60 est pilotée par une unité de commande 62 à même d'envoyer un signal de pilotage ad hoc, indiqué par la flèche S2 sur la figure 1. Cette unité de commande 62 reçoit le signal S1 provenant du capteur de mesure de viscosité 43.2 et est conçue pour traiter ce signal S1 de manière à en déduire le signal de pilotage S2 envoyé à l'unité d'entrainement 60. Plus globalement, on comprend que, à partir de la mesure réalisée en permanence par le capteur 43.2, l'unité 62 commande, après traitement du signal S1, la position pivotée du volet 43.4 et donc la section de passage du canal d'écoulement 43A. En d'autres termes, l'unité de commande 62 asservit la section de passage du canal d'écoulement 43A en fonction de la mesure fournie par le capteur 43.2. Il y a ainsi un bouclage entre la mesure de la viscosité du flux de matière à l'intérieur de la machine d'extrusion 1 et la section de passage pour cette matière dans la machine d'extrusion, plus précisément dans le canal d'écoulement 43A.

Un procédé de commande de la machine d'extrusion 1 décrite jusqu'ici en regard des figures 1 à 4, est le suivant. Pendant qu'une matière à extruder est traitée par la machine d'extrusion 1, le ou les ingrédients de cette matière étant introduits à l'intérieur du fourreau 10 via ses éléments 11 et 12, la viscosité de cette matière en cours d'extrusion est mesurée en permanence dans le flux de la matière à l'intérieur de la machine d'extrusion 1, plus précisément dans le flux de la matière à l'intérieur du module 43, grâce au capteur 43.2. En fonction de cette mesure de la viscosité de la matière en cours d'extrusion, la machine d'extrusion 1 est régulée de manière à contrôler le taux de remplissage du fourreau 10 par la matière, en ajustant la section de passage pour la matière dans la machine d'extrusion, plus précisément en ajustant la section de passage du canal d'écoulement 43A moyennant la variation de cette section de passage par le volet 43.4. Pour ce faire, la position pivotée du volet 43.4 est commandée par l'unité 62, via l'unité d'entrainement 60 et la tige 43.5. Le capteur 43.2 mesure alors, en temps réel, les modifications de viscosité engendrées par la variation, imposée par le volet 43.4, sur la section de passage du canal d'écoulement 43A, permettant ainsi une régulation en boucle fermée entre ce volet 43.4 et ce capteur 43.2. En pratique, les calculs mis en oeuvre par l'unité de commande 62 pour assurer cette régulation ne sont pas limitatifs de l'invention. A titre d'exemple d'un asservissement, efficace et facile à mettre en oeuvre, l'unité de commande 62 est conçue pour maintenir sensiblement constante la viscosité mesurée par le capteur 43.2, la valeur de viscosité que l'on souhaite ainsi maintenir inchangée étant préalablement fournie à cette unité, par exemple en connaissant préalablement une image de la valeur de viscosité « idéale » pour la matière extrudée par la machine d'extrusion 1.

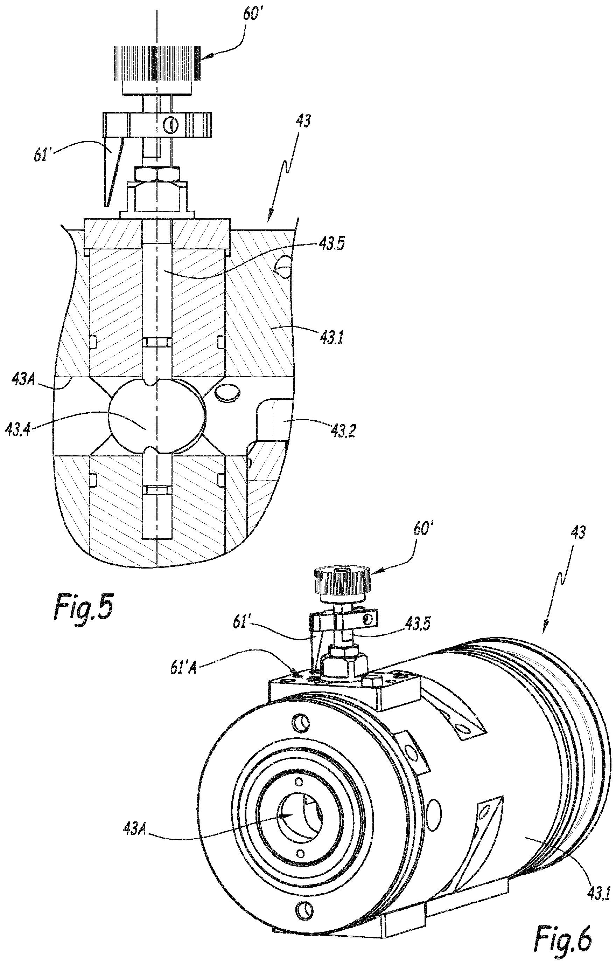

Plutôt que de mettre en oeuvre un bouclage asservi comme avec la machine d'extrusion 1 des figures 1 à 4, une variante du procédé de commande de cette machine d'extrusion consiste à ajuster la section de passage pour la matière dans la machine d'extrusion de manière manuelle. Pour ce faire, la machine d'extrusion correspondante diffère de la machine d'extrusion 1 montrée sur les figures 1 à 4 par le retrait de l'unité de commande asservie 62 et par le remplacement de l'unité d'entrainement motorisé 60 par un organe 60' de commande manuelle de la position de la tige 43.5 en rotation autour de l'axe Z-Z et donc de la position pivotée du volet 43.4, comme représenté sur les figures 5 et 6. Selon cette variante, un opérateur humain dispose de l'information correspondant au signal S1 fourni par le capteur de mesure de viscosité 43.2, par exemple par l'intermédiaire d'un afficheur, et, en fonction de cette information, l'opérateur actionne à la main, grâce à l'organe 60', la tige 43.5. Pour faciliter le réglage de la position en rotation de la tige 43.5, l'extrémité de cette tige, émergeant à l'extérieur du carter 43.1, est avantageusement pourvue d'un indicateur de position 61' associé à un marquage gradué 61'A porté par la face extérieure du carter 43.1 ou du support 43.6.

En tenant compte des considérations qui précèdent, une option du procédé de commande d'une machine d'extrusion similaire à la machine 1 consiste à utiliser un ou plusieurs paramètres de conduite de cette machine d'extrusion en plus de celui lié à la section de passage du canal d'écoulement 43A. En effet, la mesure en temps réel de la viscosité de la matière en cours d'extrusion, dans le flux de cette matière à l'intérieur de la machine d'extrusion, fournit une information en fonction de laquelle cette machine d'extrusion peut être régulée moyennant, à la fois, l'ajustement de la section de passage pour la matière en cours d'extrusion en aval de la ou des vis 20 et l'ajustement d'un ou de plusieurs paramètres de conduite de cette machine d'extrusion supplémentaires, ce ou ces paramètres supplémentaires étant choisis parmi :
- la vitesse de rotation des vis 20,
- la composition de la matière à extruder, notamment la nature et le ratio des ingrédients de cette matière,
- le débit d'admission de la matière dans la machine d'extrusion, notamment le débit d'admission de chacun des ingrédients de cette matière,
- la température imposée au fourreau 10 sous réserve que cette température soit réglable en prévoyant qu'au moins un, voire chacun des éléments 11 à 15 du fourreau soit thermorégulé, et
- l'intensité d'un dégazage de la matière en cours d'extrusion, le fourreau 10 étant alors équipé d'aménagements spécifiques de dégazage, permettant d'extraire de la matière en cours d'extrusion des gaz, tels que de la vapeur d'eau par exemple.

Par ailleurs, une variante du procédé décrit jusqu'ici consiste à mesurer en ligne la viscosité non pas au niveau du dispositif de sortie 40, mais au niveau d'un des éléments 11 à 15 du fourreau 10, notamment l'élément le plus aval 15. Autrement dit, la viscosité mesurée en permanence n'est plus celle de la matière sortant du fourreau, mais celle de la matière dans le fourreau, notamment dans la partie aval de ce fourreau. Bien entendu, dans ce cas, la machine d'extrusion est, de manière non représentée sur les figures, aménagée en conséquence : par exemple, un capteur de viscosité, similaire au capteur 43.2, est agencé dans l'alésage du fourreau, notamment au niveau d'une zone des vis 20, dans laquelle son ou leur filet est localement réduit voire supprimé au profit d'une surface sensiblement lisse. On comprend ainsi que, de manière générale, la machine d'extrusion selon l'invention comprend des moyens de mesure en ligne de la viscosité, c'est-à-dire des moyens permettant de mesurer, dans le flux de la matière s'écoulant dans son fourreau ou dans son dispositif de sortie, voire dans les deux pour, par exemple, des raisons de sécurité de mesure ou d'adaptabilité de la machine d'extrusion, la viscosité de cette matière.

Divers aménagements et options aux machines d'extrusion décrites jusqu'ici, ainsi qu'à leur procédé de commande, sont par ailleurs envisageables. A titre d'exemples :
- le module 43 peut être prévu thermorégulé moyennant l'intégration, dans son carter 43.1, d'un système de chauffage/refroidissement ad hoc ;
- notamment à des fins de supervision ou de sécurité, le module 43 peut être équipé de sondes mesurant la pression, notamment de part et d'autre du volet d'obturation 43.4, et/ou la température de la matière en cours d'extrusion circulant dans le canal d'écoulement 43A ; et/ou
- plutôt que de combiner la plaque 41, la filière 42 et le module 43, le dispositif de sortie 40 peut ne pas inclure de filière de mise en forme ; de même, le dispositif de sortie 40 peut ne pas inclure de plaque avant distincte du carter 43.1 moyennant un aménagement approprié de l'extrémité amont de ce carter.

## Revendications

1. Procédé de contrôle-commande d'une machine d'extrusion (1), cette machine d'extrusion comprenant deux vis interpénétrantes (20) d'entraînement d'une matière à extruder, procédé dans lequel, pendant qu'une matière à extruder est traitée par la machine d'extrusion :
- on mesure en permanence, dans le flux de la matière dans la machine d'extrusion, la viscosité de cette matière, et
- on régule la machine d'extrusion (1) à partir de cette mesure de viscosité, **caractérisé en ce que**, pour réguler la machine d'extrusion (1), on modifie son taux de remplissage par la matière le long des vis interpénétrantes (20) en ajustant, en aval de ces vis, une section de passage pour cette matière en fonction de la mesure de viscosité.

2. Procédé suivant la revendication 1,
dans lequel la machine d'extrusion (1) comprend en outre :
- un fourreau (10) à l'intérieur duquel les vis interpénétrantes (20) sont entrainées en rotation et la matière progresse sous l'action de ces vis, et
- un dispositif de sortie (40), qui est agencé à l'extrémité aval du fourreau et dans un canal d'écoulement (43A) duquel la matière sortant du fourreau (10) est forcée de s'écouler sous l'action des vis interpénétrantes;
et dans lequel pour réguler la machine d'extrusion (1), on modifie le taux de remplissage du fourreau (10) par la matière en ajustant la section de passage du canal d'écoulement (43A).

3. Procédé suivant la revendication 2, dans lequel on mesure la viscosité de la matière sortant du fourreau (10), dans le canal d'écoulement (43A) du dispositif de sortie (40).

4. Procédé suivant l'une quelconque des revendications précédentes, dans lequel on régule la machine d'extrusion (1) en ajustant en outre, en fonction de la mesure de la viscosité de la matière, au moins un paramètre de conduite de la machine d'extrusion choisi parmi :
- la vitesse de rotation de la ou des vis d'entrainement (20),
- la température imposée à un fourreau (10) dans lequel sont entrainées en rotation la ou les vis d'entrainement (20),
- la composition du ou des ingrédients, solides et/ou liquides, introduits dans la machine d'extrusion,
- le débit d'admission du ou des ingrédients, solides et/ou liquides, introduits dans la machine d'extrusion, et
- le dégazage de la matière dans la machine d'extrusion.

5. Procédé suivant l'une quelconque des revendications précédentes, dans lequel la matière traitée par la machine d'extrusion (1) est non newtonienne, en particulier alimentaire.

6. Machine d'extrusion (1), comportant :
- un fourreau (10) à l'intérieur duquel deux vis interpénétrantes (20) sont entrainées en rotation pour faire progresser dans le fourreau une matière à extruder,
- des moyens (43.2) de mesure, dans le flux de la matière dans la machine d'extrusion, de la viscosité de cette matière, et
- un dispositif de sortie (40), qui est agencé à l'extrémité aval du fourreau et dans un canal d'écoulement (43A) duquel la matière sortant du fourreau (10) est forcée de s'écouler sous l'action des vis interpénétrantes,
**caractérisée en ce que** la machine d'extrusion (1) comporte en outre des moyens de variation (43.4, 43.5, 60, 62 ; 43.4, 43.5, 60') adaptés pour faire varier la section de passage du canal d'écoulement (43A) de manière à modifier le taux de remplissage du fourreau (10) par la matière.

7. Machine d'extrusion suivant la revendication 6, **caractérisée en ce que** lesdits moyens de variation comprennent un obturateur (43.4) agencé de manière mobile dans le canal d'écoulement (43A) pour l'obturer de manière variable.

8. Machine d'extrusion suivant la revendication 7, **caractérisée en ce que** ledit obturateur comprend, voire consiste en un volet (43.4) d'obturation variable du canal d'écoulement (43A), agencé en travers du canal d'écoulement de manière pivotante autour d'un axe (Z-Z) sensiblement perpendiculaire à la direction d'écoulement de la matière dans le canal d'écoulement.

9. Machine d'extrusion suivant l'une des revendications 7 ou 8, **caractérisé en ce que** les moyens de mesure (43.2) sont agencés en amont de l'obturateur (43.4), en particulier en amont du volet (43.4).

10. Machine d'extrusion suivant l'une quelconque des revendications 6 à 9, **caractérisée en ce que** lesdits moyens de variation comprennent une unité (62) de commande asservie en fonction d'un signal (S1) fourni par les moyens de mesure (43.2).

11. Machine d'extrusion suivant l'une quelconque des revendications 6 à 9, **caractérisée en ce que** lesdits moyens de variation comprennent un organe de commande manuelle (60').

12. Machine d'extrusion suivant l'une quelconque des revendications 6 à 11, **caractérisée en ce que** les moyens de mesure comprennent un capteur de mesure de viscosité (43.2), qui est agencé dans le canal d'écoulement (43A) du dispositif de sortie (40) et qui y mesure la viscosité de la matière s'écoulant dans ce canal d'écoulement.

13. Machine d'extrusion suivant la revendication 12, **caractérisée en ce que** le canal d'écoulement (43A) est délimité dans un carter modulaire dédié (43.1) du dispositif de sortie (40), qui porte fixement le capteur de mesure (43.2) et qui porte au moins une partie desdits moyens de variation (43.4, 43.5, 60, 62 ; 43.4, 43.5, 60').

14. Machine d'extrusion suivant la revendication 13, **caractérisée en ce que** le dispositif de sortie (40) comporte en outre , à son extrémité amont, une plaque (41) de liaison avec l'extrémité aval du fourreau (10), qui est agencée en amont du carter modulaire (43.1).

15. Machine d'extrusion suivant l'une des revendications 13 ou 14, **caractérisée en ce que** le dispositif de sortie (40) comporte en outre, à son extrémité aval, une filière (42) de mise en forme de la matière sortant du dispositif de sortie, qui est agencée en aval du carter modulaire (43.1).

## Patentansprüche

1. Verfahren zur Steuerung eines Extruders (1), wobei der Extruder zwei ineinandergreifende Schnecken (20) zum Antrieb eines zu extrudierenden Materials umfasst, wobei das Verfahren bei der Bearbeitung eines zu extrudierenden Materials durch den Extruder Folgendes umfasst:
- laufendes Messen der Viskosität des Materials in dem Materialstrom in dem Extruder und
- Regeln des Extruders (1) ausgehend von der gemessenen Viskosität, **dadurch gekennzeichnet, dass** zur Regelung des Extruders (1) ein Grad der Befüllung des Extruders (1) mit dem Material entlang der ineinandergreifenden Schnecken (20) durch Anpassen eines stromabwärts der Schnecken angeordneten Durchtrittsabschnitts für das Material in Abhängigkeit von der gemessenen Viskosität verändert wird.

2. Verfahren nach Anspruch 1,
wobei der Extruder (1) des Weiteren Folgendes umfasst:
- einen Mantel (10), in dessen Innerem die ineinandergreifenden Schnecken (20) drehend angetrieben werden und sich das Material unter der Wirkung der Schnecken fortbewegt, und
- eine Auslassvorrichtung (40), welche an dem stromabwärts liegenden Ende des Mantels angeordnet ist und in deren Strömungskanal (43A) das den Mantel (10) verlassende Material unter der Wirkung der ineinandergreifenden Schnecken zwangsgefördert wird;
und wobei zur Regelung des Extruders (1) der Grad der Befüllung des Mantels (10) mit dem Material durch Anpassen eines Durchtrittsabschnitts des Strömungskanals (43A) verändert wird.

3. Verfahren nach Anspruch 2, wobei die Viskosität des den Mantel (10) verlassenden Materials in dem Strömungskanal (43A) der Auslassvorrichtung (40) gemessen wird.

4. Verfahren nach einem der vorhergehenden Ansprüche, wobei der Extruder (1) des Weiteren durch Anpassen mindestens eines Betriebsparameters des Extruders in Abhängigkeit von der gemessenen Viskosität geregelt wird, wobei der Betriebsparameter ausgewählt ist aus:
- der Drehzahl mindestens einer Antriebsschnecke (20),
- der Temperatur, mit welcher ein Mantel (10) beaufschlagt ist, in dem die mindestens eine Antriebsschnecke (20) drehend angetrieben wird,
- der Zusammensetzung mindestens eines in den Extruder eingeführten festen und/oder flüssigen Bestandteils,
- der Zufuhrmenge mindestens eines in den Extruder eingeführten festen und/oder flüssigen Bestandteils, und
- der Ausgasung des Materials in dem Extruder.

5. Verfahren nach einem der vorhergehenden Ansprüche, wobei das mit dem Extruder (1) verarbeitete Material ein nichtnewtonsches Material, insbesondere ein Nahrungsmittel, ist.

6. Extruder (1), umfassend:
- einen Mantel (10), in dessen Innerem zwei ineinandergreifende Schnecken (20) zur Förderung eines zu extrudierenden Materials in dem Mantel drehend angetrieben sind,
- Messeinrichtungen (43.2) zur Messung der Viskosität des Materials in dem Strom des Materials in dem Extruder und
- eine Auslassvorrichtung (40), welche an dem stromabwärts liegenden Ende des Mantels angeordnet ist und in deren Strömungskanal (43A) das den Mantel (10) verlassende Material unter der Wirkung der ineinandergreifenden Schnecken zwangsförderbar ist,
**dadurch gekennzeichnet, dass** der Extruder (1) des Weiteren Veränderungseinrichtungen (43.4, 43.5, 60, 62; 43.4, 43.5, 60') aufweist, die zur Veränderung des Durchtrittsabschnitts des Strömungskanals (43A) ausgebildet sind, so dass der Grad der Befüllung des Mantels (10) mit dem Material veränderbar ist.

7. Extruder nach Anspruch 6, **dadurch gekennzeichnet, dass** die Veränderungseinrichtungen ein Absperrorgan (43.4) umfassen, welches zur variablen Absperrung des Strömungskanals (43A) beweglich in dem Strömungskanal (43A) angeordnet ist.

8. Extruder nach Anspruch 7, **dadurch gekennzeichnet, dass** das Absperrorgan eine Absperrklappe (43.4) zur variablen Absperrung des Strömungskanals (43A) umfasst oder von dieser gebildet ist, wobei die Absperrklappe um eine im Wesentlichen senkrecht zu der Strömungsrichtung des Materials in dem Strömungskanal verlaufende Achse (Z-Z) schwenkbar quer in dem Strömungskanal angeordnet ist.

9. Extruder nach einem der Ansprüche 7 oder 8, **dadurch gekennzeichnet, dass** die Messeinrichtungen (43.2) stromaufwärts des Absperrorgans (43.4), insbesondere stromaufwärts der Absperrklappe (43.4), angeordnet sind.

10. Extruder nach einem der Ansprüche 6 bis 9, **dadurch gekennzeichnet, dass** die Veränderungseinrichtungen eine Steuereinheit (62) umfassen, welche in Abhängigkeit von einem von den Messeinrichtungen (43.2) ausgegebenen Signal (S1) regelbar ist.

11. Extruder nach einem der Ansprüche 6 bis 9, **dadurch gekennzeichnet, dass** die Veränderungseinrichtungen ein manuelles Bedienelement (60') umfassen.

12. Extruder nach einem der Ansprüche 6 bis 11, **dadurch gekennzeichnet, dass** die Messeinrichtungen einen Messsensor (43.2) zur Messung der Viskosität umfassen, welcher in dem Strömungskanal (43A) der Auslassvorrichtung (40) angeordnet ist und die Viskosität des in dem Strömungskanal strömenden Materials misst.

13. Extruder nach Anspruch 12, **dadurch gekennzeichnet, dass** der Strömungskanal (43A) in einem zugeordneten Modulgehäuse (43.1) der Auslassvorrichtung (40) begrenzt ist, wobei das Modulgehäuse den Messsensor (43.2) fest trägt und zumindest einen Teil der Veränderungseinrichtungen (43.4, 43.5, 60, 62; 43.4, 43.5, 60') trägt.

14. Extruder nach Anspruch 13, **dadurch gekennzeichnet, dass** die Auslassvorrichtung (40) des Weiteren an ihrem stromaufwärts liegenden Ende eine Verbindungsplatte (41) zur Verbindung mit dem stromabwärts liegenden Ende des Mantels (10) aufweist, wobei die Verbdingungsplatte stromaufwärts des Modulgehäuses (43.1) angeordnet ist.

15. Extruder nach einem der Ansprüche 13 oder 14, **dadurch gekennzeichnet, dass** die Auslassvorrichtung (40) des Weiteren an ihrem stromabwärts liegenden Ende eine Düse (42) zur Formung des die Auslassvorrichtung verlassenden Materials aufweist, wobei die Düse stromabwärts des Modulgehäuses (43.1) angeordnet ist.

## Claims

1. A method for monitoring and controlling an extruder (1), the extruder comprising two intermeshing screws (20) for driving a material to be extruded, the method comprising, while a material to be extruded is processed by the extruder:
- continuously measuring the viscosity of the material in a flow of said material in the extruder, and
- adjusting the extruder (1) from corresponding material viscosity measurement results,
**characterized in that**, in order to adjust the extruder (1), a material filling level of the extruder, at which the extruder is filled by the material along the intermeshing screws (20), is modified by adjusting, downstream from these screws, a passage section for the material based on the material viscosity measurement results.

2. The method according to claim 1,
wherein the extruder (1) further comprises:
- a sheath (10) inside which the intermeshing screws (20) are rotated and the material advances under the action of these screws, and
- an output device (40), which is arranged at a downstream end of the sheath and in a flow channel (43A) of which the material leaving the sheath (10) is forced to flow under the action of the intermeshing screws;
and wherein in order to adjust the extruder (1), the material filling level in the sheath (10) is adjusted by adjusting a passage section of the flow channel (43A).

3. The method according to claim 2, wherein the viscosity is measured for the material leaving the sheath (10), in the flow channel (43A) of the output device (40).

4. The method according to any one of the preceding claims, wherein the extruder (1) is adjusted by further adjusting, based on the material viscosity measurement results, at least one behavior parameter of the extruder chosen from among:
- rotation speed of the screws (20),
- temperature imposed on a sheath (10) in which the driving screws (20) are rotated,
- composition of the ingredient(s), solid and/or liquid, introduced into the extruder,
- flow rate of the ingredient(s), solid and/or liquid, introduced into the extruder, and
- degassing of the material in the extruder.

5. The method according to any one of the preceding claims, wherein the material processed by the extruder (1) is non-Newtonian, in particular food.

6. An extruder (1), comprising:
- a sheath (10) inside which two intermeshing screws (20) are rotated to cause a material to be extruded to advance in the sheath,
- measuring means (43.2) for measuring the viscosity of the material in a flow of the material in the extruder, and
- an output device (40), which is arranged at the downstream end of the sheath and in a flow channel (43A) of which the material leaving the sheath (10) is forced to flow under the action of the intermeshing screws,
**characterized in that** the extruder (1) further comprises varying means (43.4, 43.5, 60, 62; 43.4, 43.5, 60') suitable for varying a passage section of the flow channel (43A) so as to modify a material filling level at which the sheath (10) is filled by the material.

7. The extruder according to claim 6, **characterized in that** the varying means comprise a closure member (43.4) arranged movably in the flow channel (43A) to close off the flow channel variably.

8. The extruder according to claim 7, **characterized in that** the closure member comprises, or even consists of, a flap (43.4) for variably closing off the flow channel (43A), the flap being arranged across the flow channel so as to pivot around an axis (Z-Z) substantially perpendicular to flow direction of the material in the flow channel.

9. The extruder according to one of claims 7 or 8, **characterized in that** the measuring means (43.2) are arranged upstream from the closure member (43.4), in particular upstream from the flap (43.4).

10. The extruder according to any one of claims 6 to 9, **characterized in that** the varying means comprise a control unit (62) that is slaved based on a signal (S1) provided by the measuring means (43.2).

11. The extruder according to any one of claims 6 to 9, **characterized in that** the varying means comprise a manual control member (60').

12. The extruder according to any one of claims 6 to 11, **characterized in that** the measuring means comprise a viscosity measuring sensor (43.2), which is arranged in the flow channel (43A) of the output device (40) and which measures the viscosity of the material flowing in the flow channel.

13. The extruder according to claim 12, **characterized in that** the flow channel (43A) is defined in a dedicated modular case (43.1) of the output device (40), which fixedly carries the viscosity measuring sensor (43.2) and which carries at least part of the varying means (43.4, 43.5, 60, 62; 43.4, 43.5, 60').

14. The extruder according to claim 13, **characterized in that** the output device (40) further comprises, at an upstream end thereof, a plate (41) for connecting with a downstream end of the sheath (10), the plate being arranged upstream from the modular case (43.1).

15. The extruder according to one of claims 13 or 14, **characterized in that** the output device (40) further comprises, at a downstream end thereof, a die (42) for shaping the material leaving the output device, the die being arranged downstream from the modular case (43.1).
